# EUROPÄISCHE PATENTSCHRIFT

(11) **EP 0 839 846 B1**
(45) Veröffentlichungstag und Bekanntmachung des Hinweises auf die Patenterteilung: **17.11.1999**
(21) Anmeldenummer: 97115597.3
(22) Anmeldetag: 09.09.1997
(51) Int. Cl.: C08G 18/70, C08G 18/75, C09D 175/04

(54) **Wässrige Zweikomponenten-Polyurethan-Beschichtungsmittel, Verfahren zu deren Herstellung und deren Verwendung**
Aqueous two component polyurethane coating agent, process for its production and use
Enduit aqueux a base de polyurethanne a deux composants, son procedé de production et utilisation

(30) Priorität: 31.10.1996 DE 19644044
(43) Veröffentlichungstag der Anmeldung: 06.05.1998
(73) Patentinhaber: Degussa-Hüls Aktiengesellschaft, 60287 Frankfurt am Main (DE)
(72) Erfinder: Janischewski, Klaus, 46284 Dorsten (DE); Reichel, Dirk, Dr., 46284 Dorsten (DE)

(56) Entgegenhaltungen:
- EP-A- 0 358 979
- EP-A- 0 548 669
- EP-A- 0 554 747
- EP-A- 0 583 728
- EP-A- 0 669 352
- WO-A-96/18668

## Beschreibung

Die Erfindung betrifft praktisch hilfslösemittelfreie Zweikomponenten-Polyurethan-Beschichtungsmittel mit einer wäßrigen Dispersion mindestens einer organischen Polyhydroxylverbindung als Bindemittelkomponente und mindestens einem in der Dispersion fein verteilten monomeren Diisocyanat als Härterkomponente. Die Erfindung betrifft weiterhin ein Verfahren zur Herstellung dieser Beschichtungsmittel sowie deren Verwendung.

### 1. Stand der Technik

Wäßrige Lacksysteme gewinnen aus wirtschaftlichen und ökologischen Gründen zunehmend an Bedeutung. In chemisch vernetzenden Zweikomponenten-Polyurethanlacken dienen freie Isocyanatgruppen enthaltende Verbindungen ("Polyisocyanate") als Härter für das Bindemittel, das im allgemeinen ein organisches Polymer mit NCO-reaktiven Gruppen ist, z.B. ein Polyacrylatpolyol, Polyetherpolyol oder Polyesterpolyol. Diese Lacke haben wegen der hervorragenden Eigenschaften der mit ihnen erzeugten Beschichtungen eine große Bedeutung erlangt. Dabei konnte bis in die jüngere Vergangenheit nicht auf organische Lösemittel verzichtet werden. Die Verwendung von Wasser erschien lange Zeit nicht möglich, da Isocyanatgruppen bekanntlich nicht nur, wie gewünscht, mit den organisch gebundenen NCO-reaktiven Gruppen, z.B. Hydroxylgruppen, des Bindemittels, sondern auch in unerwünschter Weise mit Wasser reagieren. Dadurch entstehen Harnstoffstrukturen, und es wird Kohlendioxid frei. Dies sollte einerseits zu einer verringerten Vernetzungsdichte in der ausgehärteten Beschichtung und andererseits zur Bildung von Schaum infolge der Gasentwicklung führen - mit nachteiligen Folgen für die Verarbeitbarkeit der Systeme und die optischen Eigenschaften der Beschichtungen. Insgesamt erschienen solche wäßrigen Systeme wegen zu geringer Topfzeit (oder Verarbeitungszeit) und nicht voll befriedigender Eigenschaften der Beschichtungen als nicht brauchbar für die Praxis.

Die Hydrolyse der Isocyanatgruppen kann man verhindern, indem man sie blockiert (oder verkappt). Dazu setzt man die freien Polyisocyanate mit Blockierungsmitteln, wie sekundären oder tertiären Alkoholen: Lactamen. z.B. ε-Caprolactam; oder Oximen, z.B. Methylethylketoxim, um. Die blockierten Polyisocyanate sind bei Raumtemperatur und mäßig erhöhten Temperaturen stabil und können mit dem Bindemittel zu wäßrigen Einkomponenten-Beschichtungsmitteln abgemischt werden. Bei den Härtungstemperaturen der Beschichtungen wird das Blockierungsmittel abgespalten, und die frei werdenden Isocyanatgruppen reagieren mit den reaktionsfähigen Gruppen, meistens Hydroxylgruppen. des Bindemittels unter Kettenvernetzung. Blockierte Isocyanate vermeiden zwar die mit der Hydrolyse der Isocyanatgruppen verbundenen Probleme, erfordern allerdings mit der Blockierung einen zusätzlichen Verfahrensschritt, erheblich höhere Härtungstemperaturen und setzen zudem bei der Härtung das Blockierungsmittel frei, das nicht ohne weiteres in die Umwelt entlassen werden darf.

Ein wäßriges Zweikomponenten-Polyurethan-Beschichtungssystem mit freie Isocyanatgruppen enthaltendem Härter war daher immer noch erwünscht. Nach DE 27 08 442 und DE 35 29 249 werden Kunststoffdispersionen organische Di- bzw. Polyisocyanate zur Verbesserung des Eigenschaftsbildes zugesetzt. Bei den dispergierten Kunststoffen handelt es sich jedoch nicht um organische Polyhydroxylverbindungen, wie sie in der Polyurethanchemie als Reaktionspartner für Polyisocyanate üblich sind, sondern um gegenüber Isocyanatgruppen inerte Stoffe. Der eigenschaftsverbessernde Effekt geht also nicht auf eine chemische Vernetzung zurück, sondern auf die Umhüllung des dispergierten Kunststoffs mit der aus dem Isocyanat und Wasser gebildeten Polyharnstoffverbindung.

Chemisch vernetzende wäßrige Zweikomponenten-Polyurethan-Beschichtungsmittel mit freien Polyisocyanaten als Härter für das Bindemittel wurden, soweit ersichtlich, erstmals in EP 0 358 979 beschrieben. Danach vermögen Polyhydroxyacrylate als Bindemittelkomponente bestimmte Polyisocyanate mit freien Isocyanatgruppen, die auch als Lackpolyisocyanate bezeichnet werden, zu emulgieren. Das so entstehende wäßrige Zweikomponentensystem härtet zu vernetzten Filmen aus. Die Lackpolyisocyanate sind Biuret-, Urethan-, Urethdion und/oder Isocyanuratgruppen enthaltende oligomere Derivate von gut verfügbaren monomeren oder einfachen Diisocyanaten, insbesondere von Hexamethylendiisocyanat (HDI), Isophorondiisocyanat (IPDI) und/oder Bis(isocyanatocyclohexyl)methan (H₁₂MDI oder kurz HMDI). Die nach EP 0 358 979 verwendeten Lackpolyisocyanate haben eine Viskosität bei 23°C von bis zu 1.000 mPa·s und weisen eine mittlere NCO-Funktionalität von 2,2 bis 5 auf. Monomere Diisocyanate als alleinige Härter sind deshalb wegen ihrer niedrigere Viskosität ebenso ausgeschlossen wie infolge ihre Bifunktionalität. Aber auch im Gemisch sind sie offenbar unerwünscht, denn sie sollen gemäß EP 0 358 979 nach der Herstellung der Lackpolyisocyanate in bekannter Weise, vorzugsweise durch Destillation, von den Lackpolyisocyanaten abgetrennt werden. Die Lackpolyisocyanate müssen, wie die zuvor erwähnten blockierten Polyisocyanate, in einem gesonderten Verfahrensschritt hergestellt und zudem wegen ihres höheren Molekulargewichts mit organischen Lösemitteln auf eine anwendungsgerechte Viskosität verdünnt oder über den Einbau ionisch- oder nichtionisch-hydrophiler Zentren selbstdispergierbar gemacht werden.

Weitere Veröffentlichungen befassen sich vornehmlich mit der Erweiterung des Einsatzfeldes emulgierend wirkender Bindemittelkomponenten und der Variation - einschließlich einer nichtionisch-hydrophilen Modifizierung durch Alkoxylierung- der Polyisocyanat-Härterkomponenten, vor allem mit dem Ziel der Verlängerung der Topfzeit und der Verbesserung des Eigenschaftsbildes der Beschichtungen. Hydrophil modifizierte Polyisocyanate sind allerdings als Härterkomponente problematisch, weil die ausgehärteten Beschichtungen wegen der nach wie vor enthaltenen hydrophilen Gruppen mehr oder minder wasserempfindlich sind. Beispiele für Bindemittelvariationen und/oder die Verwendung hydrophil modifizierter Polyisocyanate finden sich in DE 41 01 696, 41 35 571, 42 26 270, 43 17 791, 43 22 242 und 43 26 670 sowie in EP 0 469 389. 0 496 205, 0 542 085. 0 542 105, 0 543 228, 0 562 436 und 0 583 728. Speziell mit der Herstellung hydrophil modifizierter Polyisocyanate für den Einsatz in wäßrig-dispersen Zweikomponenten-Polyurethan-Systemen befassen sich u.a. EP 0 206 059, 0 516 277, 0 540 985, 0 548 669, 0 645 410, 0 680 983 und 0 703 255.

Die derzeit vorwiegend verwendeten und im technischen Maßstab produzierten Isocyanathärter für wäßrige Zweikomponenten-Polyurethan-Systeme besitzen eine mittlere NCO-Funktionalität, die in dem von der EP 0 358 979 angegebenen Rahmen von 2,2 bis 5 liegt. Mit ihnen werden typischerweise wäßrige Klarlacke mit einem Festkörperanteil von 40 bis 50 Gew.-% hergestellt. Diese Beschichtungsmittel haben jedoch den Nachteil, daß sie in der applizierbaren Formulierung üblicherweise organische Lösemittel in Mindestmengen von 10 bis 20 Gew.-% enthalten, weil dies zur optimalen Verarbeitung und zum Erreichen des gewünschten Lackeigenschaftsprofils notwendig ist. Wäßrig-disperse Zweikomponenten-Polyurethan-Beschichtungsmittel mit monomeren Diisocyanaten und einem Gehalt an organischen Lösemitteln von <1 Gew.-%, bezogen auf den Festkörperanteil, sind bisher weder explizit beschrieben, noch auf dem Markt erhältlich. Die Verwendung von monomeren Diisocyanaten als Härter wird zwar explicit oder implicit in einer Reihe von Patentschriften erwähnt (z.B. in EP 0 562 436, EP 0 583 728, DE 43 26 670 und DE 42 26 270), in den Beispielen wird jedoch ebenfalls stets ein organisches Lösemittel in Mengen von 10 bis 20 Gew.-% in der applizierbaren Formulierung mitverwendet.

### 2. Beschreibung der Erfindung

Einer der Gegenstände der Erfindung ist ein wäßrig-disperses Zweikomponenten-Polyurethan-Beschichtungsmittel, enthaltend
(A) eine wäßrige Dispersion mindestens einer organischen Polyhydroxylverbindung als Bindemittelkomponente A und
(B) mindestens ein in der Dispersion fein verteiltes, unblockiertes monomeres Diisocyanat als Härterkomponente B,
wobei das Äquivalentverhältnis der Hydroxylgruppen in A zu den Isocyanatgruppen in B 0,5:1 bis 5:1 beträgt.

Ein anderer Gegenstand der Erfindung ist ein Verfahren zur Herstellung solcher Beschichtungsmittel, bei dem man
(A) in einer wäßrigen Dispersion mindestens einer organischen Polyhydroxylverbindung als Bindemittelkomponente A
(B) mindestens ein unblockiertes monomeres Diisocyanat als Härterkomponente B fein verteilt,
wobei das Äquivalentverhältnis der Hydroxylgruppen in A zu den Isocyanatgruppen in B wiederum 0,5:1 bis 5:1 beträgt.

Ein weiterer Gegenstand der Erfindung ist die Verwendung dieser Beschichtungsmittel für die Beschichtung von Substraten.

Die Beschichtungsmittel nach der Erfindung weisen eine zwar begrenzte, aber für die meisten praktischen Bedürfnisse ausreichende Verarbeitungszeit/Topfzeit auf. die bei Raumtemperatur im allgemeinen 2 bis 12 Stunden beträgt. Innerhalb dieser Zeit nimmt der Gehalt an freien Isocyanatgruppen nicht in erheblichem Maße ab, und die Viskosität der Dispersion der Bindemittelkomponente A mit der darin feinverteilten Härterkomponente B nimmt nicht nennenswert zu. Die Vernetzungsdichte und damit die lacktechnischen Eigenschaften bleiben praktisch unverändert. Während der Lagerung und der Verarbeitung des Beschichtungsmittels findet keine störende Entwicklung von Kohlendioxid statt. Der Gehalt an Lösemittel beträgt nur <1 Gew.-%, bezogen auf den Festkörperanteil der Dispersion. Hinsichtlich der Verarbeitungsmethoden und der lacktechnischen Eigenschaften der ausgehärteten Beschichtung stehen die Beschichtungsmittel nach der Erfindung denjenigen des Standes der Technik nicht nach. Überraschenderweise muß man weder die vergleichsweise aufwendigen hydrophilierten Lackpolyisocyanate verwenden. noch die Isocyanatgruppen blockieren, um dieses günstige Eigenschaftsbild der Beschichtungsmittel nach der Erfindung zu erzielen. Vielmehr kann man die in lösemittelhaltigen Zweikomponenten-Systemen gebräuchlichen unblockierten, nicht hydrophil modifizierten monomeren (oder einfachen) Diisocyanate einsetzen, vorausgesetzt daß sie in der wäßrigen Dispersion des Lackharzes, zweckmäßig durch Einwirkung starker Scherkräfte, hinreichend fein verteilt werden. Die guten lacktechnischen Eigenschaften der Beschichtungsmittel werden dadurch nicht beeinträchtigt. Dies ist überraschend, denn man hätte erwarten sollen, daß die feine Verteilung der Diisocyanate zu einer verstärkten Hydrolyse unter Bildung unakzeptabler Mengen an monofunktionalen Isocyanaten führen würde. Monofunktionale Isocyanate tragen nicht zur Vernetzung der Bindemittelmoleküle bei und mindern daher die Qualität der Beschichtung.

### 2.1 Die organische Polyhydroxylverbindung als Bindemittelkomponente A

Als Bindemittelkomponente A können die für Zweikomponenten-Beschichtungsmittel üblichen hydrophilen, wasserverdünnbaren Systeme, d.h. in Wasser dispergierte Polyhydroxylverbindungen, jeweils für sich allein oder als Mischung von zwei oder mehr Vertretern, verwendet werden. Je nach dem Molgewicht und dem Grad der Hydrophilität sind die Bindemittelkomponenten A dispers verteilt (mit mittleren Teilchengrößen von >0,1 µm), liegen kolloiddispers (mit mittleren Teilchengrößen im Bereich von 10 bis 100 nm) oder aber in molekulardisperser Verteilung (mit mittleren Teilchengrößen von <10 nm) vor. Im allgemeinen sind sowohl dispers verteilte, als auch kolloid- und molekulardisperse Anteile vorhanden. Auf jeden Fall muß die Bindemittelkomponente A als Dispersion oder als kolloid- bis molekulardisperse "Lösung" mit Wasser verdünnbar sein. Die wäßrige "Lösung" oder Dispersion weist im allgemeinen einen Festkörpergehalt von 15 bis 55 Gew.-%, eine Viskosität bei 23°C von 10 bis 10.000 mPa·s und einen pH-Wert von 6 bis 9 auf.

Die Bindemittelkomponenten A können bekannte Polymerisations-, Polykondensations- oder Polyadditionsharze sein, wie Polyacrylatharze, Polyesterharze und Polyurethanharze. Auch Mischungen aus mehreren Harzen derselben oder verschiedener Klassen sind geeignet. Das Molekulargewicht kann stark variieren; beispielsweise kann das zahlendurchschnittliche Molekulargewicht (Mₙ) 1.000 bis 100.000. vorzugsweise 2.000 bis 20.000 betragen. Die Harze können linear oder verzweigt sein. Die Wasserverdünnbarkeit dieser Harze und die Stabilität der verdünnten Lösungen oder Dispersionen beruht in der Regel auf der Anwesenheit von ionisch hydrophilen Gruppen, wie Carboxylat-, Sulfonat- oder quaternären Ammoniumgruppen, die aus potentiell ionisch hydrophilen Gruppen, wie Carbonsäure-, Sulfonsäure- oder tertiären Aminogruppen, durch Neutralisierung entstehen. Die potentiell ionischen Carboxylgruppen werden in der Regel nicht vollständig neutralisiert, so daß die Harze im allgemeinen Säurezahlen zwischen 20 und 100 mg KOH/g aufweisen. Natürlich tragen auch die für die Reaktion mit den Isocyanatgruppen der Härterkomponente B benötigten Hydroxylgruppen zur Hydrophilität der Bindemittelkomponente A und damit zur Wasserverdünnbarkeit bei. Neben den Hydroxylgruppen können noch weitere hydrophilierende Gruppen im Molekül vorhanden sein, z.B. Polyoxyalkylengruppen, sowie weitere Gruppen, die mit Isocyanatgruppen reagieren können, wie am Polymergerüst angebundene Amino-, Imino-, Merkapto- oder CH-acide Gruppen, wie Malonsäurederivate. Bevorzugte Bindemittelkomponenten A haben Hydroxylzahlen von 50 bis 300, vorteilhaft von 100 bis 200.

Die Dispersionen der Bindemittelkomponente A können noch weitere wasserverdünnbare organische Polyhydroxyverbindungen enthalten, die mit der jeweiligen Bindemittelkomponente A verträglich sind. wie wasserlösliche, gegebenenfalls Oxyalkylengruppen aufweisende Alkohole mit mehr als zwei Hydroxylgruppen, wie Glycerin, Trimethylolethan. Trimethylolpropan, 1,2,4-Butantriol, 1,2,6-Hexantriol und Pentaerythrit sowie die Ethoxylierungs- und/oder Propoxylierungsprodukt dieser Alkohole. Mit ihrer Hilfe kann man die lacktechnischen Eigenschaften der ausgehärteten Beschichtung modifizieren und bestimmten Anforderungen anpassen.

Die wäßrig-dispersen Bindemittelkomponenten A können nach bekannten Verfahren, z.B. nach dem Schmelzemulgierprozeß oder nach dem Acetonverfahren, hergestellt werden. Bei letzterem kann man beispielsweise von einer Lösung einer carboxylfunktionellen Bindemittelkomponente A, z.B. eines Polyacrylatharzes, in Aceton ausgehen, wie sie bei der Polymerisation anfällt. Der Lösung kann man zunächst ein Neutralisierungsmittel zusetzen. Als solche eignen sich anorganische oder organische Basen, insbesondere flüchtige tertiäre Amine, wie Triethylamin oder N,N-Dimethylethanolamin. Vorteilhaft werden nicht alle Carboxylgruppen neutralisiert, vielmehr liegt der Neutralisierungsgrad im allgemeinen zwischen 50 und 100%, so daß die Säurezahlen der teilneutralisierten Bindemittelkomponenten A unter 80 mg KOH/g liegen. Hohe Neutralisierungsgrade führen insbesondere bei Bindemittelkomponenten A mit hoher Carboxylfunktionalität zu hochviskosen Dispersionen, so daß man den Festkörperanteil herabsetzen müßte, um handhabbare Dispersionen zu erhalten. In solchen Fällen empfiehlt sich eine Teilneutralisierung, die Dispersionen mit brauchbarer Viskosität und akzeptablem Festkörpergehalt ergibt.

Nach der Neutralisierung setzt man der Acetonlösung demineralisiertes (oder vollentsalztes) Wasser zu. Alternativ kann aber auch ein Gemisch aus Wasser und Neutralisationsmittel zur Bindemittellösung, die Bindemittellösung zu einem Gemisch aus Wasser und Neutralisationsmittel und und ein Gemisch aus Bindemittellösung und Neutralisierungsmittel zum Wasser gegeben werden. Hohe Scherkräfte sind dabei grundsätzlich nicht erforderlich, fördern aber gegebenenfalls eine feine Verteilung der dispersen Phase aus der Bindemittelkomponente A in der kontinuierlichen wäßrig-organischen Phase. Man kann z.B. schnellaufende Rührer, Dissolver oder Rotor/Stator-Mischer verwenden. Dann destilliert man bei höherer Temperatur, wie 40 bis 90°C. und gegebenenfalls zum Schluß unter vermindertem Druck sowie zweckmäßig unter Scherkrafteinwirkung das Aceton weitgehend ab, das für einen neuen Polymerisationsansatz verwendet werden kann. Man erhält so lagerstabile Bindemitteldispersionen mit Festkörpergehalten von 15 bis 55 Gew.-% und Lösemittelrestgehalten von <1 Gew.-%, bezogen auf den Festkörpergehalt. Diese Dispersionen können unmittelbar oder nach zweckentsprechender Verdünnung mit Wasser verwendet werden, gegebenenfalls zusammen mit anderen, verträglichen Bindemitteln, die der fertigen Dispersion oder aber der Acetonlösung vor dem Dispergierschritt zugesetzt werden können.

### 2.2 Das monomere Diisocyanat als Härterkomponente B

Es ist ein wesentliches Merkmal der Erfindung, daß die Härterkomponente B ein monomeres, nicht blockiertes und nicht hydrophil modifiziertes, in der Lacktechnik übliches Diisocyanat ist. Es handelt sich dementsprechend um Diisocyanate mit aliphatisch, cycloaliphatisch, araliphatisch oder aromatisch gebundenen Isocyanatgruppen, die eine Viskosität bis zu 50 mPa·s bei 23°C haben und daher ohne Zusatz organischer Lösemittel problemlos in die Bindemittelkomponente A eingearbeitet werden können. Besonders geeignet sind Diisocyanate mit aliphatisch und/oder cycloaliphatisch gebundenen Isocyanatgruppen, wie Hexamethylendiisocyanat (HDI), Bis(isocyanatocyclohexyl)methan (HMDI), 2-Methylpentandiisocyanat, 1,6-Diiso-1,6-Diisocyanato-2,2,4- und/oder -2,4,4-trimethylhexan und insbesondere 3-Isocyanatomethyl-3,5,5-trimethylcyclohexylisocyanat (IPDI). Ebenfalls brauchbar. wenn auch weniger bevorzugt, sind Diisocyanate mit aromatisch gebundenen Isocyanatgruppen. wie 2.4-Diisocyanatotoluol (TDI), 4,4'-Diisocyanatodiphenylmethan (MDI) oder die entsprechenden technischen Gemische mit ihren Homologen und Isomeren. Weiterhin sind natürlich auch Mischungen aus mehreren der genannten monomeren Diisocyanate verwendbar.

Überraschenderweise tritt beim Härten der Beschichtungsmittel trotz des im Vergleich zu den Lackpolyisocyanaten niedrigeren Molgewichts kein nennenswerter Verlust an monomeren Diisocyanaten ein. Die Vernetzungsdichte der ausgehärteten Beschichtungen entspricht also den Erwartungen, und die Belastung durch Diisocyanate am Arbeitsplatz und in der Umwelt wird bei Einhaltung aller Arbeitssicherheits- und Umweltschutzvorschriften gering gehalten.

### 2.3 Herstellung der Beschichtungsmittel

Zur Herstellung der gebrauchsfertigen Beschichtungsmittel wird die Härterkomponente B kurz vor der Verarbeitung des Beschichtungsmittels in der Dispersion der Bindemittelkomponente A emulgiert, wobei die letztere die Funktion eines Emulgators für die Diisocyanate übernimmt. Auf jeden Fall ist kein zusätzliches Emulgiermittel erforderlich, wenn auch in manchen Fällen hilfreich. Die beiden Komponenten können durch einfaches Verrühren bei Raumtemperatur gemischt werden. Vorteilhaft übt man starke Scherkräfte aus. z.B. durch schnellaufende Rührer, Dissolver, Vibratoren oder Turbomischer. Dadurch erreicht man die erwünschte feine Verteilung der Härterkomponente B in der Dispersion der Bindemittelkomponente A. Es ist vorteilhaft, wenn die mittlere Teilchengröße der fein verteilten Härterkomponente B in demselben Größenordnungsbereich liegt wie diejenige der Bindemittelkomponente A. Die Mengen der Bindemittelkomponente A und der Härterkomponente B werden so bemessen, daß das Aquivalentverhältnis der Hydroxylgruppen in der Bindemittelkomponente A zu den Isocyanatgruppen in der Härterkomponente B 0,5:1 bis 5:1. vorzugsweise 1:1 bis 3:1 beträgt.

Bei der Vermischung der Komponenten A und B entzieht die Bindemittelkomponente A die Härterkomponente B dem Zugriff des Wassers, sei es durch Diffusion des Diisocyanats in die dispergierten Teilchen der Bindmittelkomponente A, sei es durch eine Stabilisierung der gebildeten Diisocyanattröpfchen durch eine emulgierende Wirkung der dispergierten Polyolteilchen der Bindemittelkomponente A. Jedenfalls tritt bei zweckentsprechender Lagerung und Verarbeitung des Beschichtungsmittels kein nennenswerter Verlust an Diisocyanat durch Reaktion mit Wasser ein. Dementsprechend findet auch keine nennenswerte Kohlendioxidentwicklung statt.

Die Beschichtungsmittel nach der Erfindung weisen den Vorteil auf, daß sie ohne Zusatz von äußeren Emulgatoren formuliert werden können. Sie sind daher vorzugsweise frei von äußeren Emulgatoren. Selbstverständlich ist es jedoch möglich. bei der Formulierung übliche äußere Emulgatoren in üblichen oder kleiner als üblichen Mengen zuzusetzen. Weiterhin können die Beschichtungsmittel nach der Erfindung andere übliche Hilfs- und Zusatzstoffe enthalten, beispielsweise Pigmente. Entschäumungsmittel, Verlaufmittel, Verdickungsmittel, Sikkative, Füllstoffe und/oder Katalysatoren für die Isocyanat-Additionsreaktion. Diese Hilfs- und Zusatzstoffe sind keine erfindungswesentlichen Bestandteile der Beschichtungsmittel. Sie befinden sich im allgemeinen in der Bindemittelkomponente A und können dieser gegebenenfalls vor oder nach ihrer Dispergierung zugesetzt werden. Ersteres ist immer dann empfehlenswert, wenn der betreffende Hilfs- und Zusatzstoff nicht in die wäßrige Phase gelangen soll.

Der Festkörpergehalt der Beschichtungsmittel liegt im allgemeinen zwischen 35 und 60 Gewichtsprozent, bevorzugt zwischen 40 und 50 Gewichtsprozent, der Anteil des Wassers am Beschichtungsmittel dementsprechend in der Regel im Bereich von 40 bis 65 Gewichtsprozent, bevorzugt zwischen 50 und 60 Gewichtsprozent. Die Viskosität des Beschichtungsmittels bei 23°C beträgt am Anfang, d.h. unmittelbar nach dem Mischen der Komponenten A und B, üblicherweise 10 bis 1.000, bevorzugt 50 bis 500 mPa·s, und der pH-Wert liegt in der Regel zwischen 6 und 9. Wenn die Viskosität für das vorgesehene Auftragsverfahren zu hoch ist, kann sie durch Zusatz von Wasser ohne weiteres auf einen anwendungsgerechten Wert eingestellt werden.

### 2.4 Verwendung der Beschichtungsmittel

Da die so hergestellten Beschichtungsmittel reaktionsfähige Komponenten enthalten. können sie vor ihrer Verarbeitung nicht unbegrenzt gelagert werden. Die Topfzeit/Verarbeitungszeit hängt u.a. von der chemischen Natur der Bindemittelkomponente A und der Härterkomponente B ab. Im allgemeinen sollten die Beschichtungsmittel, bei Raumtemperatur gelagert. spätestens innerhalb von 12 Stunden, zweckmäßig innerhalb von 8 Stunden nach ihrer Herstellung durch Mischen der Komponenten A und B verbraucht werden. Die Beschichtungsmittel eignen sich für praktisch alle Einsatzgebiete, in denen mit lösemittelhaltigen oder lösemittelfreien Beschichtungssystemen hochwertige Beschichtungen auf Substraten erzeugt werden, die die erforderlichen Härtungstemperaturen vertragen. Sie werden nach üblichen Verfahren auf die Substrate aufgebracht, wie Spritzen. Tauchen oder Streichen. Die Härtungstemperaturen betragen in der Regel bis zu etwa 120°C, insbesondere 60 bis 100°C, die Härtungszeiten im allgemeinen bis zu etwa 45 Minuten, insbesondere 15 bis 30 Minuten. Die resultierenden Lackfilme sind kratzfest und lösemittelbeständig, blasenfrei und als Klarlacke transparent. Die Beschichtungsmittel nach der Erfindung eignen sich besonders zur Herstellung von Decklackierungen auf Holz-, Metall- und Kunststoffsubstraten, die den entsprechenden Beschichtungen nach dem Stand der Technik in bezug auf ihre mechanischen Eigenschaften sowie die Beständigkeit gegen Chemikalien und Umwelteinflüsse nicht nachstehen.

Die folgenden Beispiele sollen die Erfindung weiter erläutern, nicht aber ihren Umfang begrenzen, wie er in den Patentansprüchen definiert ist.

### Beispiel 1

Ein Polyacrylat mit der Hydroxylzahl 130 und der Säurezahl 40 mg KOH/g wird als 60-gewichtsprozentige Lösung in Aceton nach dem Zulaufverfahren unter Verwendung von 2 Gew.-% tert.-Butylperoctoat als Initiator und 2 Gew.-% Dodecylmerkaptan als Regler, jeweils bezogen auf die Gesamtmenge der Acrylate, aus 27 Gew.-% Hydroxyethylacrylat. 46 Gew.-% n-Butylacrylat, 12 Gew.-% Methylmethacrylat, 5 Gew.-% Acrylsäure und 10 Gew.-% Tone^{(R)}M 100 (ein Ester aus Hydroxyethylacrylat und Caprolacton) hergestellt. Zu 1.000 g dieser Lösung werden zunächst 30 g N,N-Dimethylethanolamin und dann 1.000 g demineralisiertes Wasser gegeben. Dann wird das Aceton unter vermindertem Druck entfernt. Man erhält so eine wäßrige Dispersion mit einem Festkörpergehalt von 38 Gew.-%. Mit dieser Dispersion werden durch Zugabe von IPDI Zweikomponenten-Wasserlacke mit OH:NCO-Verhältnissen von 1:1,3, 1:1,5 und 1:1.8 hergestellt. Dazu werden in jeweils 500.0 g der Dispersion 64 g, 73 g und 88 g IPDI mittels eines schnellaufenden Rührers/Dissolvers eingearbeitet. Das Beschichtungsmittel hat einen Restlösemittelgehalt von <1 Gew.-%, bezogen auf den Festkörperanteil, und kann innerhalb von 8 Stunden nach der Herstellung verarbeitet werden. Beschichtungen mit einer NaBstärke von 100 µm härten bei 80°C innerhalb von 30 bis 45 min zu klar glänzenden, harten, elastischen und lösemittelbeständigen Filmen aus.

### Beispiel 2

Ein Polyacrylat mit der Hydroxylzahl 100 und der Säurezahl 40 mg KOH/g wird als 60-gewichtsprozentige Lösung in Aceton nach dem Zulaufverfahren unter Verwendung von 2 Gew.-% tert.-Butylperoctoat als Initiator und 2 Gew.-% Dodecylmerkaptan als Regler, jeweils bezogen auf die Gesamtmenge der Acrylate. aus 17 Gew.-% Hydroxyethylacrylat, 51 Gew.-% n-Butylacrylat, 17 Gew.-% Methylmethacrylat, 5 Gew.-% Acrylsäure und 10 Gew.-% Tone^{(R)}M 100 hergestellt. Zu 1.000 g dieser Lösung werden zunächst 27 g Trimethylolpropan (um eine Gesamthydroxylzahl von 150 einzustellen). dann 30 g N,N-Dimethylethanolamin und darauf 1.300 g demineralisiertes Wasser gegeben. Dann wird das Aceton unter vermindertem Druck entfernt. Man erhält so eine wäßrige Dispersion mit einem Festkörpergehalt von 33 Gew.-%. Durch Einarbeiten von 280 g IPDI mittels eines schnellaufenden Rührers/Dissolvers erhält man hieraus einen wasserverdünnbaren Zweikomponenten-Polyurethanklarlack mit einem Verhältnis OH:NCO wie 1:1.5 und einem Restlösemittelgehalt von <1 Gew.-%, bezogen auf den Festkörperanteil, der innerhalb von 8 Stunden nach der Herstellung verarbeitet werden kann. Beschichtungen mit einer Naßstärke von 100 µm härten bei 80°C innerhalb von 30 bis 45 min zu klar glänzenden, harten, elastischen und lösemittelbeständigen Filmen aus.

### Beispiel 3

Ein Polyacrylat mit der Hydroxylzahl 130 und der Säurezahl 40 mg KOH/g wird als 60-gewichtsprozentige Lösung in Aceton nach dem Zulaufverfahren unter Verwendung von 2 Gew.-% tert.-Butylperoctoat als Initiator und 2 Gew.-% Dodecylmerkaptan als Regler, jeweils bezogen auf die Gesamtmenge der Acrylate. aus 27 Gew.-% Hydroxyethylacrylat. 46 Gew.-% n-Butylacrylat, 12 Gew.-% Methylmethacrylat, 5 Gew.-% Acrylsäure und 10 Gew.-% Tone^{(R)}M 100 (ein Ester aus Hydroxyethylacrylat und Caprolacton) hergestellt. Zu 1.000 g dieser Lösung werden zunächst 30 g N,N-Dimethylethanolamin und dann 1.500 g demineralisiertes Wasser gegeben. Dann wird das Aceton unter vermindertem Druck entfernt. Man setzt 840 g Titandioxid (Kronos(R)2190) zu und dispergiert es ca. 20 min mit einem Dissolver bei einer Umfangsgeschwindigkeit von 12 m/s. Man erhält so ein eine pigmentierte Lackharzdispersion mit einer Pigment-Volumen-Konzentration von 20 Vol.-%. Durch Einarbeiten von 230 g IPDI mittels eines schnellaufenden Rührers/-Dissolvers erhält man einen weiß pigmentierten, wasserverdünnbaren Zweikomponenten-Polyurethanlack mit einem Restlösemittelgehalt von <1 Gew.-% und einem OH:CNO-Verhältnis von 1:1,5. der innerhalb von ca. 6 Stunden verarbeitet werden kann. Beschichtungen mit einer Naßstärke von 100 µm härten bei 80°C innerhalb von 30 bis 45 min zu klar glänzenden, harten, elastischen und lösemittelbeständigen Filmen.

### Beispiel 4

Aus 224 g eines Polyesters mit einer Hydroxylzahl von 108 und einer Säurezahl von 21 mg KOH/g (hergestellt aus einer Säurekomponente, bestehend aus 86 Gew.-% Isophthalsäure und 14 Gew.-% Trimellithsäureanhydrid. und einer Alkoholkomponente, bestehend aus 64 Gew.-% 1,6-Hexandiol, 21 % Gew.-% Trimethylolpropan und 15 Gew.-% Trimethyl-1,6-hexandiol) und 56 g eines Polyesters mit einer Hydroxylzahl von 564 (hergestellt aus Isophthalsäure und Trimethylolpropan im Molverhältnis 1:2) wird eine 60-gewichtsprozentige Lösung in Aceton hergestellt. Zu 467 g dieser Lösung werden zunächst 0,28 g Dibutylzinn(II)-benzoat als Katalysator, dann 7,5 g N,N-Dimethylaminoethanol und schließlich 480 g demineralisiertes Wasser gegeben. Dann wird das Aceton unter vermindertem Druck entfernt. Man erhält so eine lagerstabile Dispersion mit einem Festkörpergehalt von 37 Gew.-%. Durch Einarbeiten von 166 g IPDI mittels eines schnellaufenden Rührers/Dissolvers erhält man hieraus einen wasserverdünnbaren Zweikomponenten-Polyurethanklarlack mit einem Verhältnis OH:NCO wie 1:1,5 und einem Restlösemittelgehalt von <1 Gew.-%, bezogen auf den Festkörperanteil, der innerhalb von etwa 6 Stunden nach der Herstellung verarbeitet werden kann. Beschichtungen mit einer Naßstärke von 100 µm härten bei 100°C innerhalb von 30 bis 45 min zu klar glänzenden, harten, elastischen und lösemittelbeständigen Filmen aus.

### Beispiel 5

Aus 258 g eines Polyesters mit einer Hydroxylzahl von 108 und einer Säurezahl von 21 mg KOH/g (hergestellt aus einer Säurekomponente, bestehend aus 86 Gew.-% Isophthalsäure und 14 Gew.-% Trimellithsäureanhydrid, und einer Alkoholkomponente, bestehend aus 64 Gew.-% 1,6-Hexandiol, 21 % Gew.-% Trimethylolpropan und 15 Gew.-% Trimethyl-1,6-hexandiol wird eine 60gewichtsprozentige Lösung in Aceton hergestellt. Zu dieser Lösung werden zunächst 22 g Trimethylolpropan (um eine Gesamthydroxylzahl von 200 einzustellen), dann 0,28 g Dibutylzinn(II)-benzoat als Katalysator, darauf 8,6 g N,N-Dimethylaminoethanol und schließlich 510 g demineralisiertes Wasser gegeben. Dann wird das Aceton unter vermindertem Druck entfernt. Man erhält so eine lagerstabile Bindemitteldispersion mit einem Festkörpergehalt von 35 Gew.-%. Durch Einarbeiten von 166 g IPDI mittels eines schnellaufenden Rührers/Dissolvers erhält man hieraus einen wasserverdünnbaren Zweikomponenten-Polyurethanklarlack mit einem Verhältnis OH:NCO wie 1:1,5 und einem Restlösemittelgehalt von <1 Gew.-%, bezogen auf den Festkörperanteil, der innerhalb von etwa 6 Stunden nach der Herstellung verarbeitet werden kann. Beschichtungen mit einer Naßstärke von 100 µm härten bei 100°C innerhalb von 30 bis 45 min zu klar glänzenden, harten, elastischen und lösemittelbeständigen Filmen aus.

## Patentansprüche

1. Wäßrig-disperses Zweikomponenten-Polyurethan-Beschichtungsmittel, enthaltend
(A) eine wäßrige Dispersion mindestens einer organischen Polyhydroxylverbindung als Bindemittelkomponente A und
(B) mindestens ein in der Dispersion fein verteiltes, unblockiertes monomeres Diisocyanat als Härterkomponente B,
wobei das Äquivalentverhältnis der Hydroxylgruppen in A zu den Isocyanatgruppen in B 0,5:1 bis 5:1 beträgt.

2. Beschichtungsmittel nach Anspruch 1, gekennzeichnet durch einen Festkörpergehalt von 35 bis 60 Gewichtsprozent, einen Wassergehalt von 40 bis 65 Gewichtsprozent, eine Viskosität bei 23°C unmittelbar nach dem Mischen der Komponenten A und B von 10 bis 1.000 mPa·s und einen pH-Wert von 6 bis 9.

3. Beschichtungsmittel nach einem der Ansprüche 1 oder 2, gekennzeichnet durch einen Lösemittelgehalt von <1 Gew.-%, bezogen auf den Festkörperanteil.

4. Beschichtungsmittel nach einem der Ansprüche 1 bis 3, dadurch gekennzeichnet, daß die mindestens eine organische Polyhydroxylverbindung ein Polymerisations-, Polykondensations- oder Polyadditionsharz mit einem zahlendurchschnittlichen Molekulargewicht (Mₙ) von 1.000 bis 100.000 ist.

5. Beschichtungsmittel nach Anspruch 4, dadurch gekennzeichnet. daß die Hydroxylzahl der mindestens einen organischen Polyhydroxylverbindung 50 bis 300 mg KOH/g beträgt.

6. Beschichtungsmittel nach Anspruch 4, dadurch gekennzeichnet. daß die Hydroxylzahl der mindestens einen organischen Polyhydroxylverbindung 100 bis 200 mg KOH/g beträgt.

7. Beschichtungsmittel nach einem der Ansprüche 1 bis 6, dadurch gekennzeichnet, daß die mindestens eine Härterkomponente B ein Diisocyanat mit aliphatisch und/oder cycloaliphatisch gebundenen Isocyanatgruppen ist.

8. Beschichtungsmittel nach einem der Ansprüche 1 bis 6, dadurch gekennzeichnet, daß die mindestens eine Härterkomponente B Isophorondiisocyanat ist.

9. Verfahren zur Herstellung von wässerig-dispersen Zweikomponenten-Polyurethan-Beschichtungsmitteln nach den Ansprüchen 1 bis 7, dadurch gekennzeichnet, daß man
(A) in mindestens einer in Wasser dispergierten organischen Polyhydroxylverbindung als Bindemittelkomponente A
(B) mindestens ein unblockiertes monomeres Diisocyanat als Härterkomponente B fein verteilt,
wobei das Äquivalentverhältnis der Hydroxylgruppen in A zu den Isocyanatgruppen in B 0,5:1 bis 5:1 beträgt.

10. Verfahren zur Beschichtung von Substraten, dadurch gekennzeichnet, daß man als Beschichtungsmittel die wäßrig-dispersen Zweikomponenten-Polyurethan-Beschichtungsmittel nach den Ansprüchen 1 bis 7 verwendet, die gegebenenfalls übliche Hilfs- und Zusatzstoffe enthalten.

11. Verfahren nach Anspruch 10, dadurch gekennzeichnet, daß die Beschichtung eine Decklackierung auf gegebenenfalls vorbeschichteten Holz-, Metall- oder Kunststoffsubstraten ist.

## Claims

1. A two-component polyurethane coating composition in aqueous dispersion form comprising
(A) an aqueous dispersion of at least one organic polyhydroxy compound as binder component A, and
(B) at least one unblocked monomeric diisocyanate finely dispersed in the dispersion as curing agent component B,
the ratio of equivalents of the hydroxyl groups in A to equivalents of the isocyanate groups in B being in the range from 0.5:1 to 5:1.

2. A coating composition according to claim 1, characterized by a solids content of 35 to 60 percent by weight, a water content of 40 to 65 percent by weight, a viscosity at 23°C immediately after the mixing of components A and B of 10 to 1000 mPa.s and a pH of 6 to 9.

3. A coating composition according to either of claims 1 and 2, characterized by a solvent content of <1% by weight, based on the solids component.

4. A coating composition according to any of claims 1 to 3, characterized in that the at least one organic polyhydroxy compound is an addition-polymerization, polycondensation or poly-addition resin having a number average molecular weight (Mₙ) of 1000 to 100,000.

5. A coating composition according to claim 4, characterized in that the hydroxyl number of the at least one organic polyhydroxy compound is 50 to 300 mg KOH/g.

6. A coating composition according to claim 4, characterized in that the hydroxyl number of the at least one organic polyhydroxy compound is 100 to 200 mg KOH/g.

7. A coating composition according to any of claims 1 to 6, characterized in that the at least one curing agent component B is a diisocyante having aliphatically and/or cycloaliphatically attached isocyanate groups.

8. A coating composition according to any of claims 1 to 6, characterized in that the at least one curing agent component B is isophorone diisocyanate.

9. A process for preparing two-component polyurethane coating compositions in aqueous dispersion form according to any of claims 1 to 7, characterized in that it comprises finely dispersing
(B) at least one unblocked monomeric diisocyante as curing agent component B
(A) in at least one water-dispersed organic polyhydroxy compound as binder component A,
the ratio of equivalents of the hydroxyl groups in A to equivalents of the isocyanate groups in B being in the range from 0.5:1 to 5:1.

10. A process for coating substrates, characterized in that it comprises using the two-component polyurethane coating compositions in aqueous dispersion form according to any of claims 1 to 7, optionally containing customary auxiliaries and additives.

11. A process according to claim 10, characterized in that the coating is a top coat on precoated or non-precoated wood, metal or plastics substrates.

## Revendications

1. Compositions de revêtement en polyuréthanne à deux composants, dispersées dans l'eau contenant :
A) une dispersion aqueuse d'au moins un composé polyhydroxylé organique en tant que composant d'agent liant A et,
B) au moins un diisocyanate monomère, non bloqué, finement dispersé dans la dispersion, en tant que composant durcisseur B
dans lesquelles le rapport en équivalents des groupes hydroxyle dans A vis-à-vis des groupes isocyanate dans B s'élève à 0,5 : 1 à 5 : 1.

2. Compositions de revêtement selon la revendication 1,
caractérisées
par une teneur en composés solides allant de 35 à 60 % en poids, par une teneur en eau de 40 à 65 % en poids, par une viscosité à 23°C immédiatement apres le mélange des composants A et B de 10 à 1000 mPas et par une valeur de pH de 6 à 9.

3. Composition de revêtement selon l'une des revendications 1 ou 2,
caractérisée
par une teneur en solvant inférieure à 1 % en poids rapporté à la quantité de matière solide.

4. Composition de revêtement selon l'une des revendications 1 à 3,
caractérisée en ce que
le (les) composé(s) polyhydroxylé (s) organique (s) est (sont) une résine de polymérisation, de polycondensation ou de polyaddition ayant un poids moléculaire numerique moyen Mw allant de 1000 à 100000.

5. Composition de revêtement selon la revendication 4,
caractérisée en ce que
l'indice d'hydroxyle du (des) composé(s) polyhydroxylé(s) organique (s) s'élève (nt) à 50 à 300 mg KOH/g.

6. Composition de revêtement selon la revendication 4,
caractérisée en ce que
l'indice d'hydroxyle du (des) composé(s) polyhydroxylé(s) organique (s) s'élève (nt) 100 à 200 mg KOH/g.

7. Composition de revêtement selon l'une des revendications 1 à 6,
caractérisée en ce que
le (les) composant(s) de durcisseur (s) B est (sont) un diisocyanate avec des groupes isocyanates à liaisons aliphatiques et/ou cycloaliphatiques.

8. Composition de revêtement selon l'une des revendications 1 à 6,
caractérisée en ce que
le (les) composant (s) durcisseur (s) B est (sont) l'isophoronediisocyanate.

9. Procédé de production de compositions de revêtement en polyuréthanne à deux composants dispersées en milieu aqueux, selon les revendications 1 a 7,
caractérisé en ce qu'
on disperse finement
A) dans au moins un composé organique polyhydroxylé dispersé dans l'eau en tant que composant d'agent liant A,
B) au moins un diisocyanate monomère non bloqué en tant que composant durcisseur B,
les rapport en équivalents des groupes hydroxyles dans A aux groupes isocyanate dans B s'élèvent à 0,5 : 1 à 5 : 1..

10. Procédé de revêtement de substrats
caractérisé en ce qu'
on utilise comme composition de revêtement la composition de revêtement en polyuréthanne à deux composants, dispersée dans l'eau, selon les revendications 1 à 7 qui contient le cas échéant des adjuvants et des additifs usuels.

11. Procédé selon la revendication 10,
caractérisé en ce que
le revêtement est un laquage de couverture sur des substrats en bois, en métal ou en matière plastique éventuellement pré-enduits.
